# EUROPÄISCHE PATENTSCHRIFT

(11) **EP 2 474 083 B1**
(45) Veröffentlichungstag und Bekanntmachung des Hinweises auf die Patenterteilung: **08.07.2020**
(21) Anmeldenummer: 10745663.4
(22) Anmeldetag: 27.08.2010
(51) Int. Cl.: H02K 9/22, H02K 1/14, H02K 1/20, H02K 1/32, H02K 3/30, H02K 3/32, H02K 3/52

(54) **ELEKTROMOTOR, INSBESONDERE STELL- ODER ANTRIEBSMOTOR IN KRAFTFAHRZEUGEN MIT KÜHLVORRICHTUNG**
ELECTRIC MOTOR, IN PARTICULAR SERVO OR DRIVE MOTOR IN MOTOR VEHICLES
MOTEUR ÉLECTRIQUE, NOTAMMENT MOTEUR DE POSITIONNEMENT OU MOTEUR D'ENTRAÎNEMENT, INSTALLÉ DANS DES VÉHICULES AUTOMOBILES

(30) Priorität: 04.09.2009 DE 102009029220
(43) Veröffentlichungstag der Anmeldung: 11.07.2012
(73) Patentinhaber: Robert Bosch GmbH, 70442 Stuttgart (DE)
(72) Erfinder: BARTH, Matthias, 73110 Hattenhofen (DE); ROTH, Karl-Juergen, 71701 Schwieberdingen (DE); NEUBAUER, Achim, 76547 Sinzheim-Vormberg (DE); EWERT, Andreas, 77839 Lichtenau (DE)
(86) Internationale Anmeldenummer: PCT/EP2010/062562
(87) Internationale Veröffentlichungsnummer: WO 2011/026793

(56) Entgegenhaltungen:
- EP-A2- 1 300 924
- WO-A1-2008/139912
- WO-A1-2009/093699
- DE-A1- 10 052 913
- GB-A- 603 754
- JP-A- 2004 088 944
- JP-A- 2009 118 680
- US-A1- 2006 066 159

## Beschreibung

Die Erfindung bezieht sich auf einen Elektromotor, insbesondere einen Stell- oder Antriebsmotor in Kraftfahrzeugen, nach dem Oberbegriff des Anspruches 1.

### Stand der Technik

In der DE 10 2007 034 195 A1 wird ein Innenläufer-Elektromotor beschrieben, dessen Stator einen radial außen liegenden Statorring und mehrere über den Umfang verteilte und sich radial nach innen erstreckende Trägerzähne zur Aufnahme bestrombarer Spulen aufweist. Der Statorring ist aus einer Mehrzahl einzelner Rückschlusssegmente zusammengesetzt, die im montierten Zustand den durchgehenden Statorring bilden.

Aus der DE 10 2004 008 936 A1 ist ein Anker für einen permanenterregten Gleichstrommotor bekannt, dessen Ankerkörper einen Rückschlussring mit sich radial nach außen erstreckenden Ankerzähnen zur Aufnahme jeweils einer Ankerwicklung aufweist. Der Anker läuft im Statorgehäuse um, an dessen Innenseite Permanentmagnete angeordnet sind.

In der WO2009/093699 A1 wird ein Innenläufer-Elektromotor beschrieben, in dessen Stator über den Umfang verteilt mehrere, sich in Achsrichtung erstreckende Ölkanäle eingebracht sind. Die Ölkanäle befinden sich zwischen dem außen liegenden Statorring und einem vom Statorring umgriffenen Trägerring, an dem radial nach innen ragende Trägerzähne zur Aufnahme von Spulen angeordnet sind.

Das Dokument EP1300924 beschreibt einen Elektromotor nach dem Oberbegriff des Anspruchs 1 oder 3.

### Offenbarung der Erfindung

Der Erfindung liegt die Aufgabe zugrunde, mit einfachen Maßnahmen den Wirkungsgrad von Elektromotoren zu verbessern. Es soll insbesondere eine gute Wärmeableitung gewährleistet sein.

Diese Aufgabe wird erfindungsgemäß mit den Merkmalen des Anspruches 1 oder 3 gelöst. Die Unteransprüche geben zweckmäßige Weiterbildungen an.

Der erfindungsgemäße Elektromotor, der insbesondere als Innenläufermotor ausgebildet ist, umfasst einen Stator und einen drehbar gelagerten Rotor, wobei zumindest eines dieser Bauteile eine Mehrzahl von über den Umfang angeordneter Trägerzähnen aufweist und jeder Trägerzahn mit einer gewickelten Spule versehen ist. Erfindungsgemäß ist vorgesehen, dass mindestens einem Trägerzahn ein sich in Achsrichtung erstreckender Wärmeableitungskanal mit einem wärmeableitenden Medium zugeordnet ist. Der Wärmeableitungskanal erstreckt vorzugsweise über die axiale Länge des Elektromotors, wobei grundsätzlich auch axiale Teillängen in Betracht kommen, beispielsweise über ein Drittel, die Hälfte oder zwei Drittel bzw. drei Viertel der axialen Länge des Elektromotors. Der Wärmeableitungskanal ist mit einem wärmeableitenden Medium ausgefüllt, das im Vergleich zu Ausführungen aus dem Stand der Technik eine bessere Wärmeableitung gewährleistet. Dies erlaubt den Einsatz leichterer und leistungsdichterer elektrischer Maschinen mit verbessertem Wirkungsgrad, die aufgrund ihrer kompakten Ausführung im Betrieb eine verhältnismäßige hohe Wärmedichte aufweisen, was jedoch über den Wärmeableitungskanal reguliert werden kann. Der Wärmeableitungskanal sorgt somit für eine effiziente Kühlung, so dass thermisch bedingte Schädigungen vermieden werden.

Insbesondere in einer Ausführung der Trägerzähne mit einer Mehrzahl geschichteter Blechlamellen, aus denen die Trägerzähne in Achsrichtung schichtweise zusammengesetzt sind, kommt dem Wärmeableitungskanal zusätzlich zur wärmeableitenden Funktion eine die Blechlamellen fixierende Funktion zu. Das wärmeableitende Medium ist entweder unmittelbar auf die Mantelfläche der Trägerzähne aufgebracht und erstreckt sich somit über eine Mehrzahl einzelner Blechlamellen, aus denen die Trägerzähne zusammengesetzt sind. Möglich ist aber auch eine Ausführung, bei der der Wärmeableitungskanal als Ausnehmung ausgeführt ist, die sich durch mehrere, parallel zueinander angeordnete Blechlamellen erstreckt, wobei in die Ausnehmung das wärmeableitende Medium eingebracht ist. Dem wärmeableitenden Medium kommt somit auch eine die Blechlamellen durch Kleben zusammenhaltende Funktion zu.

Gemäß einer weiteren vorteilhaften Ausführung besitzt das wärmeableitende Medium auch elektrisch isolierende Eigenschaften und ist zweckmäßigerweise auf die Mantelfläche der Trägerzähne aufgebracht, die von dem Spulendraht umwickelt ist. In dieser Ausführung liegt das Medium zwischen der Spulenwicklung und der Oberfläche des Trägerzahns und bewirkt eine elektrische Isolierung. Das Aufbringen des Mediums auf die Oberfläche der Trägerzähne hat zudem eine Höhennivellierung bzw. einen Ausgleich in einer unterschiedlichen Oberflächenkontur zur Folge, die durch die Vielzahl geschichteter Blechlamellen entstehen kann, aus denen die Trägerzähne gefertigt sind. Darüber hinaus wird auch eine akustisch dämpfende Wirkung erzielt.

Als Wärmeableitungskanal kommt, wie bereits oben dargestellt, zum einen eine sich in Achsrichtung erstreckende, das Blechpaket durchdringende kanalförmige Ausnehmung in Betracht, die mit dem wärmeableitenden Medium ausgefüllt ist. Zum andern ist es auch möglich, an der Mantelfläche eines die Trägerzähne haltenden Trägerrings einen oder mehrere sich in Achsrichtung erstreckende Wärmeableitungskanäle aus dem wärmeableitenden Medium vorzusehen. Die letztgenannte Ausführung zeichnet sich dadurch aus, dass keine Ausnehmungen im Blechpaket erforderlich sind, aus denen die Trägerzähne gefertigt sind. Gegebenenfalls kommt aber auch eine Kombination von Ausnehmungen in den Trägerzähnen und ein Aufbringen des Wärmeableitungskanals auf die Trägerringmantelfläche in Betracht.

Der Wärmeableitungskanal kann grundsätzlich sowohl in einem Stator als auch in einem Rotor bzw. Anker vorgesehen sein. Je nach Ausführung des Elektromotors weist der Stator einen Trägerring mit daran sich radial nach innen erstreckenden Trägerzähnen auf, die jeweils Träger einer bestrombaren Spule sind, wobei in diesem Fall bei einer Ausführung des Wärmeableitungskanals auf der Trägerringmantelfläche eine Positionierung auf der radialen Außenseite des Trägerrings zweckmäßig ist. Besteht dagegen der Rotor bzw. Anker aus einem Trägerring mit sich radial nach außen erstreckenden Trägerzähnen, so kann der Wärmeableitungskanal auf der radial innen oder außen liegenden Trägerringmantelfläche angeordnet werden.

In der Ausführung mit einem in die Trägerzähne eingebrachten Kanal, welcher vollständig innerhalb des jeweiligen Trägerzahns verläuft, kommt sowohl eine Anwendung auf Statoren als auch auf Rotoren bzw. Anker in Betracht. Zweckmäßigerweise verläuft der Kanal im Bereich des Trägerzahnfußes, insbesondere im Übergang zwischen dem Trägerzahnfuß und dem Trägerring. Aus Stabilitätsgründen ist es zweckmäßig, den radialen Abstand des Wärmeableitungskanals von der Trägerringmantelfläche mindestens so groß zu wählen, wie der radiale Abstand eines zwischen benachbarten Trägerzähnen liegenden Spulenaufnahmeraums von der Trägerringmantelfläche. Dies bedeutet, dass der Wärmeableitungskanal nicht näher an der Trägerringmantelfläche liegt als der Spulenaufnahmeraum.

Als weiteres Kriterium für die Positionierung und Dimensionierung des Wärmeableitungskanals im Trägerzahnfuß wird die Dicke der beiden Arme, welche von dem Wärmeableitungskanal im Trägerzahn gebildet sind, so gewählt, dass die halbe Breite des Trägerzahns an dessen schmalster Stelle nicht unterschritten wird. Der Wärmeableitungskanal nimmt somit im Trägerzahn in Umfangsrichtung eine verhältnismäßig geringe Breite ein, wodurch sichergestellt ist, dass die Dicke beider Arme zusammengenommen mindestens der Dicke des Trägerzahns an dessen schmalster Stelle entspricht. Auch hierdurch ist eine gute Stabilität des Trägerrings und der Trägerzähne gewährleistet.

Zweckmäßigerweise ist jedem Trägerzahn mindestens ein Wärmeableitungskanal zugeordnet, der als Ausnehmung innerhalb des Trägerzahns oder auf der Trägerringmantelfläche ausgeführt ist. Bei einer Kombination der beiden Ausführungsvarianten ist beispielsweise ein Wärmeableitungskanal in den Trägerzahnfuß eingebracht und sind darüber hinaus auf die Trägerringmantelfläche in Höhe jeweils eines Trägerzahns ein oder zwei parallel verlaufende Streifen bzw. Kanäle aus wärmeableitendem Medium aufgebracht, die gegebenenfalls in Umfangsrichtung über eine Schicht geringerer radialer Dicke miteinander verbunden sind. Auf diese Weise wird sowohl die Wärmeableitung als auch die Klebefunktion verbessert.

Als wärmeableitendes Medium, das vorzugsweise auch für die Ummantelung der Trägerzähne im Bereich der Spulenwicklung verwendet wird, wird beispielsweise Polyamid (PA), insbesondere PA 6.6 verwendet. Grundsätzlich kommen aber alle wärmeleitfähigen Kunststoffe wie Thermoplaste oder Duroplaste in Betracht.

Bei der Auskleidung bzw. Ummantelung der Trägerzähne mit dem Kunststoff bzw. wärmeableitenden Medium wird zweckmäßigerweise der gesamte Spulenaufnahmeraum ausgekleidet, welcher von zwei unmittelbar zueinander benachbarten Trägerzähnen begrenzt wird. Es kann zweckmäßig sein, den Spulenaufnahmeraum mittels eines Kunststoff-Trennelements in zwei Einzelräume zu unterteilen, wobei das Kunststoff-Trennelement zweckmäßigerweise einen Teil der Kunststoffummantelung bildet, die auf die Trägerzahnoberfläche aufgebracht ist. Das Kunststoff-Trennelement bewirkt eine Separierung und Isolierung unmittelbar benachbarter Spulen.

Gemäß eines weiteren Aspektes der Erfindung ist an mindestens einem Trägerzahn, vorteilhafterweise aber an mehreren, insbesondere an sämtlichen Trägerzähen axial ein überstehender Dom aus wärmeableitendem Material angespritzt. Dieser Dom kann alternativ oder zusätzlich zu dem sich in Achsrichtung erstreckenden Wärmeableitungskanal vorgesehen sein. Der Dom steht axial über eine Stirnseite eines Trägerzahns über und bewirkt ebenfalls eine Wärmeableitung. Gegebenenfalls sind an beiden Stirnseiten der Trägerzähne überstehende Dome angeordnet.

Bei einem Verfahren zur Herstellung eines Elektromotors werden in einem ersten Schritt eine Mehrzahl einzelner Ringsegmente mit jeweils einem Trägerzahn jeweils zumindest abschnittsweise mit Kunststoff beschichtet. In einem darauf folgenden zweiten Schritt wird Spulendraht auf die Trägerzähne gewickelt, woraufhin in einem dritten Schritt die mit den Spulen versehenen Ringsegmente zu einem geschlossenen Ring zusammengesetzt werden. Es kann zweckmäßig sein, während des ersten Schrittes jeweils zwei Trägerzähne benachbarter Ringsegmente gemeinsam mit Kunststoff zu beschichten und beim Zusammensetzen einen Abschnitt der Kunststoffbeschichtung, der sich zwischen den Trägerzähnen erstreckt, als Kunststoff-Trennelement zwischen den benachbarten Ringsegmenten in den Spulenaufnahmeraum einzuklappen. Auf diese Weise wird eine einteilige Ausführung des Kunststoff-Trennelements zwischen benachbarten Spulen mit der Kunststoffbeschichtung erreicht.

Weitere Vorteile und zweckmäßige Ausführungen sind den weiteren Ansprüchen, der Figurenbeschreibung und den Zeichnungen zu entnehmen. Es zeigen:
- Fig. 1: eine Schnittdarstellung eines Stators für einen Elektromotor mit einer Reihe radial nach innen gerichteter Trägerzähne, die jeweils Träger einer bestrombaren Spule sind, mit einem sich in Achsrichtung erstreckenden Wärmeableitungskanal im Fußbereich jedes Trägerzahns,
- Fig. 2: eine ähnliche Darstellung wie Fig. 1, jedoch mit zusätzlichem wärmeableitendem Medium auf der außen liegenden Mantelfläche eines Trägerrings des Stators, an welchem sich die Trägerzähne radial nach innen erstrecken, wobei das wärmeableitende Medium auf der Außenseite pro Trägerzahn in zwei parallelen, axialen Kanälen verläuft,
- Fig. 3: eine Fig. 2 entsprechende Darstellung, jedoch mit einer Verbindungsbrücke zwischen den beiden axialen Wärmeableitungskanälen auf der Mantelfläche des Trägerrings,
- Fig. 4: ein Ringsegment mit einem segmentförmigen Abschnitt des Trägerrings und einteilig daran ausgebildetem Trägerzahn,
- Fig. 5: zwei zusammengesetzte Ringsegmente,
- Fig. 6a und 6b: zwei einzelne Ringsegmente,
- Fig. 7: zwei zusammengesetzte Ringsegmente in einer weiteren Ausführung, in der die Spulen aneinander grenzender Trägerzähne über ein KunststoffTrennelement separiert sind,
- Fig. 8: eine vergleichbare Darstellung wie Fig. 7, jedoch mit einer doppelten Isolation über zwei Kunststoff-Trennelemente zwischen benachbarten Spulen,
- Fig. 9 bis Fig. 11: in verschiedenen Verfahrensschritten die Herstellung eines Stators,
- Fig. 12: eine Draufsicht auf einen Stator mit axial an die Trägerzähne angespritzten Domen aus wärmeableitendem Material.

In den Figuren sind gleiche Bauteile mit gleichen Bezugszeichen versehen.

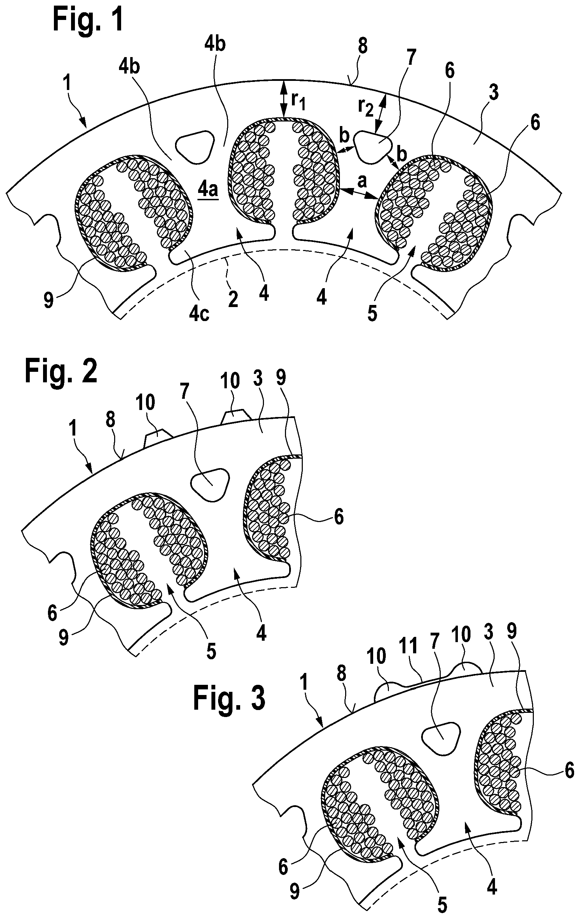

Der in Fig. 1 dargestellte Stator 1 ist Teil eines EC-Innenläufer-Elektomotors. Der Stator 1 umschließt einen drehbar gelagerten, nur andeutungsweise dargestellten Rotor 2. Der Stator 1 besteht aus einer Mehrzahl parallel angeordneter Blechlamellen, die radial außen liegend einen Trägerring 3 bilden, an welchem einstückig sich radial nach innen erstreckende Trägerzähne 4 angeordnet sind, welche jeweils Träger einer bestrombaren Spule 6 sind. Jeder Trägerzahn 4 besteht aus einem Grundkörper 4a, einem radial nach außen gerichteten Trägerzahnfuß 4b, über den der Trägerzahn mit dem Trägering verbunden ist, und auf der radialen Innenseite einem sich in Umfangsrichtung erweiterten, einen Polschuh bildenden Zahnkopf 4c, der dem Rotor 2 zugewandt ist. Zwischen benachbarten Trägerzähnen 4 befindet sich ein Spulenaufnahmeraum 5, in welchem die Drahtwicklungen benachbarter Spulen 6 aufgenommen sind.

Im Bereich jedes Trägerfußes 4b ist in den Stator 1 ein sich in Achsrichtung erstreckender Wärmeableitungskanal 7 in Form einer Ausnehmung eingebracht, der mit einem wärmeableitenden Medium ausgefüllt ist, insbesondere einem Thermoplast wie beispielsweise Polyamid (PA) 6.6 oder einem Duroplast. Der Wärmeableitungskanal 7 erstreckt sich zweckmäßigerweise über die gesamte axiale Länge des Stators 1. Der Wärmeableitungskanal 7 liegt im Übergangsbereich zwischen dem Trägerzahnfuß 4b und dem Trägerring 3 und unterteilt den Trägerzahnfuß 4b in zwei einzelne Arme, über die der Trägerzahn 4 mit der Trägerring 3 verbunden ist. Der Wärmeableitungskanal 7 ist bezüglich seiner Positionierung und seiner Dimensionierung sowie seines Querschnittes so ausgelegt, dass die Dicke b der beiden Arme 4b zusammengenommen mindestens so groß ist wie die Breite bzw. Dicke a des Trägerzahn-Grundkörpers 4a an der schmalsten Stelle. In Radialrichtung ist der Abstand r₂ zwischen dem Wärmeableitungskanal 7 und der radial außen liegenden Trägerringmantelfläche 8 des Trägerrings mindestens gleich groß wie der radiale Abstand r₁ zwischen dem Spulenaufnahmeraum 5 und der Trägerringmantelfläche 8. Aufgrund dieser Größenverhältnisse ist eine ausreichende Stabilität des Trägerzahns 4 sichergestellt. Der Querschnitt des Wärmeableitungskanals 7 ist annähernd dreieckförmig, wobei die Grundseite des Dreiecks der Trägerringmantelfläche 8 zugewandt und die Spitze radial nach innen gerichtet ist.

Jeder Trägerzahn 4 ist mit einer Kunststoffummantelung 9 versehen, welche den Spulenaufnahmeraum 5, der von benachbarten Trägerzähnen begrenzt wird, auskleidet. Als Material für die Kunststoffummantelung 9 wird vorzugsweise das wärmeableitende Medium verwendet, mit welchem die Wärmeableitungskanäle 7 ausgefüllt sind. Zusätzlich zu den wärmeleitenden Eigenschaften besitzt das Medium zweckmäßigerweise auch eine elektrisch isolierende Funktion. Da sich sowohl die Kunststoffummantelung 9 als auch der Wärmeableitungskanal 7 mit dem darin befindlichen Medium über die gesamte axiale Länge des Stators erstrecken, kommt dem wärmeableitenden Medium auch eine klebende, die einzelne Blechlamelle des Stators zusammenhaltende Funktion zu. Außerdem wird über die Kunststoffummantelung 9 im Spulenraum 5 auch eine nivellierende Funktion erzielt, indem Höhenunterschiede der einzelnen Blechlamelle in Achsrichtung gesehen von der Kunststoffummantelung 9 ausgeglichen werden.

Im Ausführungsbeispiel gemäß Fig. 2 ist auf die radial außen liegende Trägerringmantelfläche 8 des Statorringes 3 zusätzlich wärmeableitendes Material in Form von in Achsrichtung verlaufenden Wärmeableitungskanälen 10 aufgebracht, die sich über die Mantelfläche des Trägerringes erheben. Diese außen liegenden Wärmeableitungskanäle 10 sind zusätzlich zu dem zwischen dem Trägerzahnfuß und dem Trägerring in den Stator eingebrachten Wärmeableitungskanal 7 vorgesehen. Pro Trägerzahn 4 ist ein innen liegender Wärmeableitungskanal 7 und sind zwei außen liegende, auf die Trägerringmantelfläche 8 aufgebrachte Wärmeableitungskanäle 10 vorgesehen. Sämtliche Wärmeableitungskanäle 10 verlaufen parallel zueinander und erstrecken sich über die axiale Länge des Stators. Die außen liegenden Wärmeableitungskanäle 10 sind gegenüber dem innen liegenden, mittigen Wärmeableitungskanal 7 geringfügig in Umfangsrichtung versetzt angeordnet.

Das Ausführungsbeispiel gemäß Fig. 3 entspricht weitgehend demjenigen nach Fig. 2, jedoch sind die beiden außen liegenden Wärmeableitungskanäle 10 über einen Verbindungsabschnitt 11 aus wärmeableitendem Medium miteinander verbunden. Die radiale Dicke des Verbindungsabschnittes 11 ist signifikant geringer als diejenige der Wärmeableitungskanäle 10 am Außenumfang. Der Verbindungsabschnitt 11 kann sich entweder über die gesamte axiale Länge des Stators erstrecken und damit den zwischenliegenden Raum zwischen den Wärmeableitungskanälen 10 einnehmen oder aber, gemäß alternativer Ausführung, sich nur über eine axiale Teillänge erstrecken. Möglich ist auch, mit axialem Abstand mehrere einzelne, nicht miteinander verbundene und sich in Umfangsrichtung erstreckende Verbindungsabschnitte 11 zwischen den Kanälen 10 vorzusehen.

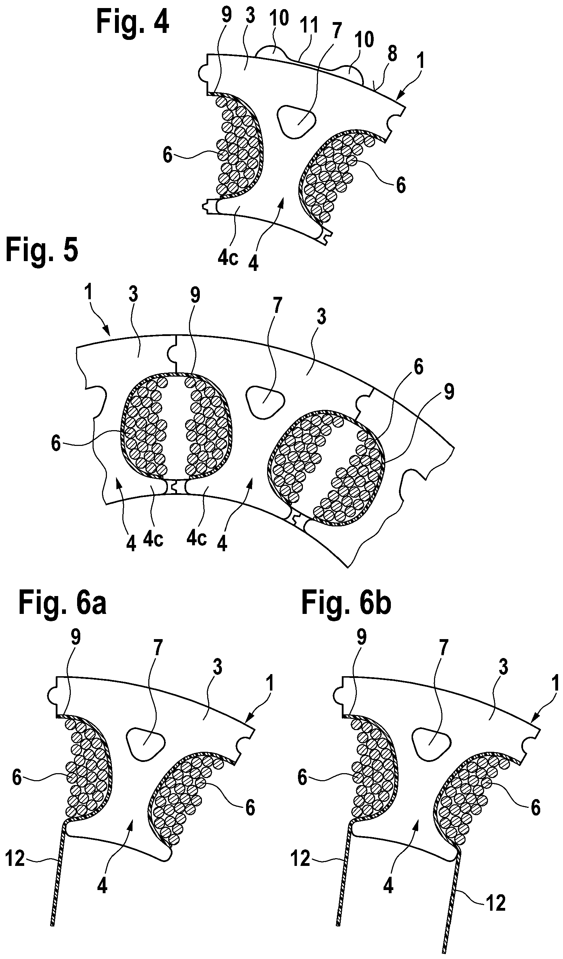

Die Ausführungen gemäß den Fig. 1 bis 3 betreffen Statoren mit in Umfangsrichtung einteilig ausgeführten Trägerringen 3 mit daran angeordneten Trägerzähnen 4. Die Ausführungsbeispiele gemäß den folgenden Fig. 4 bis 8 betreffen dagegen Statoren, die aus einzelnen Ringsegmenten zusammengesetzt sind, wobei jedes Ringsegment jeweils einen segmentförmigen Abschnitt des Trägerringes 3 und genau einen Trägerzahn 4 umfasst. Im Ausführungsbeispiel gemäß Fig. 4 ist das Ringsegment mit Wärmeableitungskanälen 7 und 10 versehen, die dem Ausführungsbeispiel nach Fig. 3 entsprechen. Zwischen den Wärmeableitungskanälen 10 erstreckt sich der Verbindungsabschnitt 11.

Die Verbindung zwischen benachbarten Ringsegmenten erfolgt in formschlüssiger Weise mithilfe eines Nut-Feder-Prinzips an den Umfangsstirnseiten des Trägerringsegmentes 3. Entsprechende Formschlusselemente, die aus dem wärmeableitenden Material bestehen, finden sich auch an den Umfangsstirnseiten des Polschuhs 4c am Trägerzahn 4. Diese Formschlusselemente aus wärmeableitendem Material sind an die Umfangsstirnseiten des Polschuhs 4c angespritzt.

Im Ausführungsbeispiel gemäß Fig. 5 sind zwei Ringsegmente im zusammengesetzten Zustand dargestellt. Jedes Ringsegment besitzt genau einen Wärmeableitungskanal 7, der im Übergangsbereich zwischen Trägerzahnfuß und Trägerring angeordnet ist. Die einander zugewandten Umfangsstirnseiten der Polschuhe 4c sind gemäß des Ausführungsbeispiels nach Fig. 4 mit angespritzten Formschlusselementen aus wärmeableitendem Material versehen, die im zusammengesetzten Zustand formschlüssig ineinander greifen.

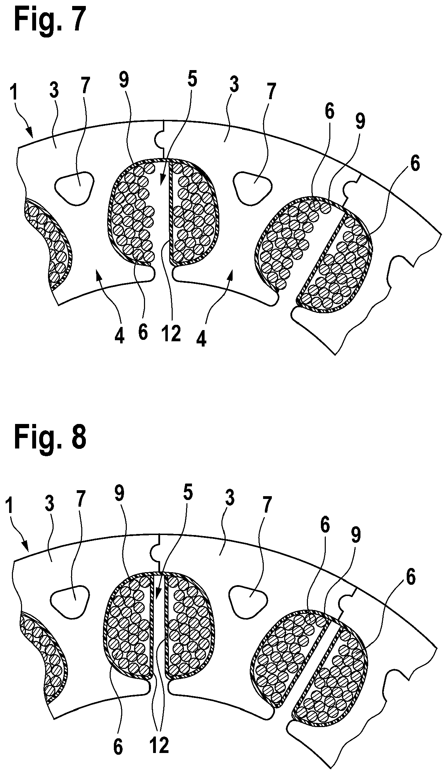

In den Fig. 6a und 6b sind weitere Ringsegmente mit jeweils einem Trägerzahn 4 dargestellt, wobei die Trägerzahnmantelfläche mit der Kunststoffummantelung 9 versehen ist. Gemäß Fig. 6a ist die Kunststoffummantelung an einer Seitenfläche des Trägerzahns 4 über die Trägerzahnfläche hinausgehend verlängert und bildet ein Kunststoff-Trennelement 12, das im zusammengeklappten Zustand gemäß Fig. 7 in den Spulenaufnahmeraum 5 einragt und benachbarte Spulen voneinander separiert.

Im Ausführungsbeispiel gemäß Fig. 6b ist die Kunststoffummantelung 9 an beiden Seitenflächen eines Trägerzahns 4 verlängert und überragt die Polschuhe des Trägerzahns. Im zusammengesetzten Zustand gemäß Fig. 8 können diese Kunststoff-Trennelemente nach Art eines Scharniers eingeklappt werden, so dass die Kunststoff-Trennelemente 12 im Spulenaufnahmeraum die benachbarten Spulen 6 voneinander trennen; auf diese Weise ist eine doppelte Isolation benachbarter Spulen im gemeinsamen Spulenaufnahmeraum gegeben.

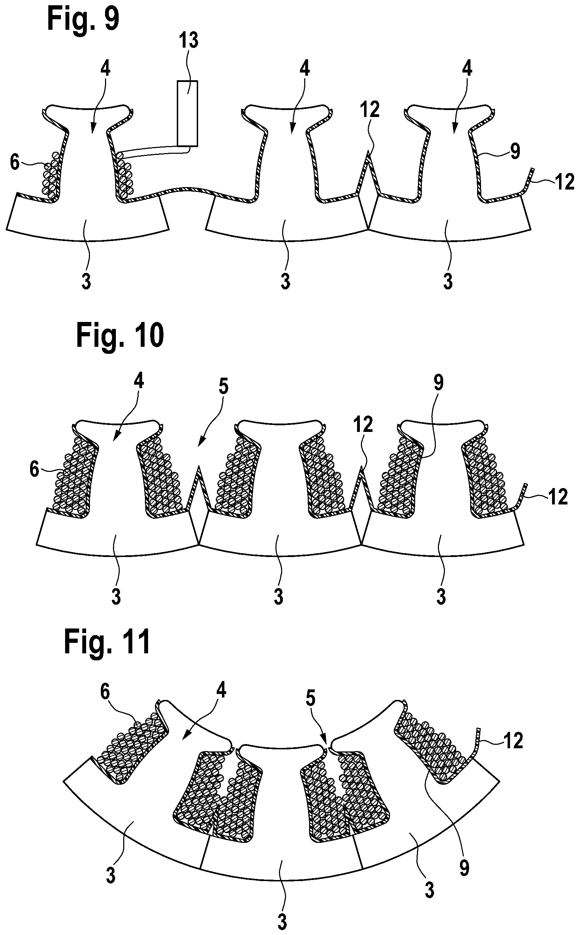

In den Fig. 9 bis 11 sind jeweils mehrere Ringsegmente des Stators in verschiedenen Verfahrensschritten bei der Herstellung dargestellt. Wie Fig. 9 zu entnehmen, wird zunächst an jedem Trägerzahn 4 die Kunststoffummantelung 9 aufgebracht. Die Seitenflächen von zwei zueinander benachbarten Trägerzähnen 4 werden mit jeweils einer durchgehenden Kunststoffummantelung 9 aus wärmeableitendem Material versehen, welche die zwischenliegende Lücke zwischen benachbarten Ringsegmenten überbrückt. Im Anschluss auf das Aufbringen der Kunststoffummantelung 12 wird mithilfe eines Wickelwerks 13 die Spule 6 auf jeden Trägerzahn 4 aufgebracht.

Da die einzelnen Ringsegmente beim Aufbringen der Kunststoffummantelung 9 auf Abstand zueinander liegen, ergibt sich in der Kunststoffummantelung ein Überstand, der bei zusammengerückten Ringsegmenten als Kunststoff-Trennelement 12 dient, das, wie in den Fig. 10 und 11 dargestellt, benachbarte Spulen 6 innerhalb eines gemeinsamen Spulenaufnahmeraums 5 voneinander separiert. Mit dem Zusammenfügen der einzelnen Ringsegmente ergibt sich die ringförmige Struktur, so wie dies in Fig. 11 dargestellt ist.

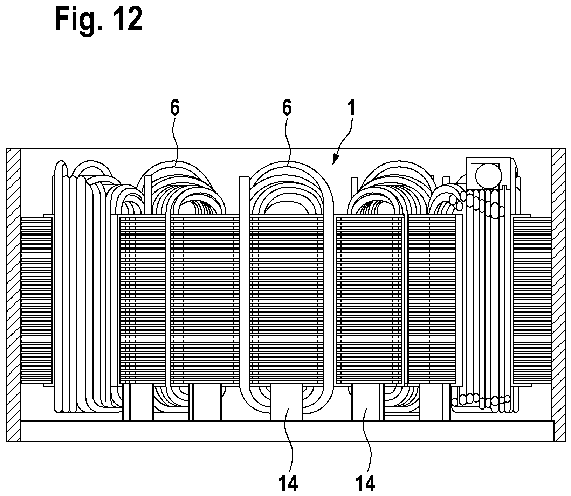

Wie in Fig. 12 dargestellt, können sich axial an die Trägerzähne, um die die Spulen 6 gewickelt sind, Kunststoffdome 14 anschließen, die aus wärmeleitendem Material bestehen und über die axiale Stirnseite der Trägerzähne überstehen. Dargestellt ist in Fig. 12 eine Draufsicht auf den Stator mit den einzelnen Blechlamellen, die den Trägerring mit den radial nach innen weisenden Trägerzähnen bilden. Die einzelnen Lamellen sind mit einem Backlack bzw. einer speziellen wärmeleitenden und zugleich elektrisch bzw. elektromagnetisch isolierenden Oberfläche beschichtet. Bei dieser Beschichtung kann es sich um das wärmeableitende Medium handeln, welches auch für die Wärmeableitungskanäle verwendet wird. Auch die Dome 12 bestehen zweckmäßigerweise aus diesem Material.

## Patentansprüche

1. Elektromotor, insbesondere Stell- oder Antriebsmotor in Kraftfahrzeugen, mit einem Stator (1) und einem Rotor (2), wobei zumindest eines dieser Bauteile eine Mehrzahl von über den Umfang angeordneten Trägerzähnen (4) aufweist und jeder Trägerzahn (4) mit einer gewickelten Spule (6) versehen ist und mindestens einem Trägerzahn (4) ein sich in Achsrichtung erstreckender Wärmeableitungskanal (7, 10) mit einem wärmeableitenden Medium zugeordnet ist, wobei der Wärmeableitungskanal (7) als axiale Ausnehmung im Trägerzahn (4) ausgeführt ist, und wobei der Wärmeableitungskanal (7) im Übergang zwischen Trägerzahnfuß (4b) und einem Trägerring (3) verläuft, an dem der Trägerzahn (4) angeordnet ist, **dadurch gekennzeichnet, dass** der radiale Abstand (r₂) des Wärmeableitungskanals (7) von der Trägerringmantelfläche (8) mindestens so groß ist wie der radiale Abstand (r₁) eines zwischen benachbarten Trägerzähnen (4) liegenden Spulenaufnahmeraums (5) von der Trägerringmantelfläche (8).

2. Elektromotor nach einem der Anspruch 1, **dadurch gekennzeichnet, dass** der Wärmeableitungskanal (7) den Trägerzahn (4) in zwei Arme unterteilt, wobei in Umfangsrichtung gesehen die Dicke (b) beider Arme zusammengenommen mindestens der Dicke (a) des Trägerzahns (4) an dessen schmalster Stelle entspricht.

3. Elektromotor, insbesondere Stell- oder Antriebsmotor in Kraftfahrzeugen, insbesondere nach Anspruch 1 oder 2, mit einem Stator (1) und einem Rotor (2), wobei zumindest eines dieser Bauteile eine Mehrzahl von über den Umfang angeordneten Trägerzähnen (4) aufweist und jeder Trägerzahn (4) mit einer gewickelten Spule (6) versehen ist und mindestens einem Trägerzahn (4) ein sich in Achsrichtung erstreckender Wärmeableitungskanal (7, 10) mit einem wärmeableitenden Medium zugeordnet ist, wobei der Wärmeableitungskanal (7) als axiale Ausnehmung im Trägerzahn (4) ausgeführt ist, wobei der Wärmeableitungskanal (7) den Trägerzahn (4) in zwei Arme unterteilt, wobei in Umfangsrichtung gesehen die Dicke (b) beider Arme zusammengenommen mindestens der Dicke (a) des Trägerzahns (4) an dessen schmalster Stelle entspricht, **dadurch gekennzeichnet, dass** jedem Trägerzahn (4) zwei beabstandete, parallel verlaufende Wärmeableitungskanäle (10) auf die Trägerringmantelfläche (8) zugeordnet sind, die auf die Trägerringmantelfläche (8) aufgebracht ist.

4. Elektromotor nach einem der Ansprüche 1 bis 3, **dadurch gekennzeichnet, dass** der Wärmeableitungskanal (7) einen annähernd dreieckförmigen Querschnitt aufweist.

5. Elektromotor nach einem der Ansprüche 1 bis 4, **dadurch gekennzeichnet, dass** der Trägerzahn (4) mit einer Kunststoffummantelung (9) versehen ist.

6. Elektromotor nach Anspruch 5, **dadurch gekennzeichnet, dass** die Kunststoffummantelung (9) aus dem gleichen Material wie das wärmeableitende Medium im Wärmeableitungskanal (7, 10) besteht.

7. Elektromotor nach Anspruch 5 oder 6, **dadurch gekennzeichnet, dass** der zwischen benachbarten Trägerzähnen (4) liegende Spulenaufnahmeraum (5) mit Kunststoff ausgekleidet ist.

8. Elektromotor nach einem der Ansprüche 1 bis 7, **dadurch gekennzeichnet, dass** innerhalb des Spulenaufnahmeraum (5) ein Kunststoff-Trennelement (12) zur Unterteilung in zwei Einzelräume angeordnet ist.

9. Elektromotor nach einem der Ansprüche 5 bis 7 und 8, **dadurch gekennzeichnet, dass** das Kunststoff-Trennelement (12) einteilig mit der Kunststoffummantelung (9) ausgebildet ist.

10. Elektromotor nach einem der Ansprüche 1 bis 8, **dadurch gekennzeichnet, dass** als wärmeableitendes Medium Polyamid (PA) verwendet wird, insbesondere PA 6.6.

11. Elektromotor, nach einem der Ansprüche 1 bis 10, **dadurch gekennzeichnet, dass** an mindestens einen Trägerzahn (4) axial ein Dom (14) aus wärmeableitendem Material angespritzt ist.

12. Elektromotor nach einem der Ansprüche 1 bis 11, **dadurch gekennzeichnet, dass** der Stator (1) des Elektromotors mit Trägerzähnen (4) versehen ist, denen ein Wärmeableitungskanal (7, 10) zugeordnet ist.

13. Verfahren zur Herstellung eines Elektromotors nach einem der Ansprüche 1 bis 12, dass in einem ersten Schritt eine Mehrzahl von Ringsegmenten mit jeweils einem Trägerzahn (4) jeweils zumindest abschnittsweise mit Kunststoff beschichtet werden, dass in einem zweiten Schritt Spulendraht auf die Trägerzähne (4) gewickelt wird und dass in einem dritten Schritt die mit den Spulen (6) versehenen Ringsegmente zu einem Ring zusammengesetzt werden.

14. Verfahren nach Anspruch 13, **dadurch gekennzeichnet, dass** im ersten Schritt jeweils zwei Trägerzähne (4) benachbarter Ringsegmente gemeinsam mit Kunststoff beschichtet werden und dass beim Zusammensetzen ein Abschnitt der Kunststoffbeschichtung als Kunststoff-Trennelement (12) zwischen benachbarten Ringsegmenten in den Spulenaufnahmeraum (5) eingeklappt wird.

## Claims

1. Electric motor, in particular actuating drive motor in motor vehicles, having a stator (1) and a rotor (2), wherein at least one of these components has a multiplicity of carrier teeth (4) arranged over the circumference, and each carrier tooth (4) is equipped with a wound coil (6) and at least one carrier tooth (4) is assigned a heat-dissipating channel (7, 10) which extends in an axial direction and which has a heat-dissipating medium, wherein the heat-dissipating channel (7) is designed as an axial recess in the carrier tooth (4), and wherein the heat-dissipating channel (7) runs at the transition between carrier tooth root (4b) and a carrier ring (3) on which the carrier tooth (4) is arranged, **characterized in that** the radial spacing (r₂) of the heat-dissipating channel (7) to the carrier ring lateral surface (8) is at least as large as the radial spacing (r₁) of a coil-receiving space (5), which is situated between adjacent carrier teeth (4), to the carrier ring lateral surface (8).

2. Electric motor according to one of Claim 1, **characterized in that** the heat-dissipating channel (7) divides the carrier tooth (4) into two arms, wherein, as viewed in a circumferential direction, the thickness (b) of the two arms considered together corresponds at least to the thickness (a) of the carrier tooth (4) at its narrowest point.

3. Electric motor, in particular actuating drive motor in motor vehicles, having a stator (1) and a rotor (2), wherein at least one of these components has a multiplicity of carrier teeth (4) arranged over the circumference, and each carrier tooth (4) is equipped with a wound coil (6) and at least one carrier tooth (4) is assigned a heat-dissipating channel (7, 10) which extends in an axial direction and which has a heat-dissipating medium, wherein the heat-dissipating channel (7) is designed as an axial recess in the carrier tooth (4), wherein the heat-dissipating channel (7) divides the carrier tooth (4) into two arms, wherein, as viewed in a circumferential direction, the thickness (b) of the two arms considered together corresponds at least to the thickness (a) of the carrier tooth (4) at its narrowest point, **characterized in that** each carrier tooth (4) is assigned two spaced-apart, parallel-running heat-dissipating channels (10) onto the carrier ring lateral surface (8), which is applied to the carrier ring lateral surface (8).

4. Electric motor according to any of Claims 1 to 3, **characterized in that** the heat-dissipating channel (7) has an approximately triangular cross section.

5. Electric motor according to any of Claims 1 to 4, **characterized in that** the carrier tooth (4) is equipped with a plastics encapsulation (9).

6. Electric motor according to Claim 5, **characterized in that** the plastics encapsulation (9) is composed of the same material as the heat-dissipating medium in the heat-dissipating channel (7, 10).

7. Electric motor according to Claim 5 or 6, **characterized in that** the coil-receiving space (5) situated between adjacent carrier teeth (4) is lined with plastic.

8. Electric motor according to any of Claims 1 to 7, **characterized in that**, within the coil-receiving space (5), there is arranged a plastics separating element (12) for division into two individual spaces.

9. Electric motor according to any of Claims 5 to 7 and 8, **characterized in that** the plastics separating element (12) is formed integrally with the plastics encapsulation (9).

10. Electric motor according to any of Claims 1 to 8, **characterized in that** polyamide (PA), in particular PA 6.6, is used as heat-dissipating medium.

11. Electric motor according to any of Claims 1 to 10, **characterized in that** a dome (14) composed of heat-dissipating material is injection-moulded onto at least one carrier tooth (4).

12. Electric motor according to any of Claims 1 to 11, **characterized in that** the stator (1) of the electric motor is equipped with carrier teeth (4) which are assigned a heat-dissipating channel (7, 10).

13. Method for producing an electric motor according to any of Claims 1 to 12, in that, in a first step, a multiplicity of ring segments with in each case one carrier tooth (4) are coated in each case at least in certain portions with plastic, in that, in a second step, coil wire is wound onto the carrier teeth (4), and in that, in a third step, the ring segments equipped with the coils (6) are assembled to form a ring.

14. Method according to Claim 13, **characterized in that**, in the first step, in each case two carrier teeth (4) of adjacent ring segments are jointly coated with plastic, and **in that**, during the assembly process, a portion of the plastics coating is folded into the coil-receiving space (5) to serve as plastics separating element (12) between adjacent ring segments.

## Revendications

1. Moteur électrique, en particulier moteur de réglage ou d'entraînement dans des véhicules automobiles, comprenant un stator (1) et un rotor (2), au moins l'un de ces composants présentant une pluralité de dents de support (4) disposées sur la périphérie et chaque dent de support (4) étant pourvue d'une bobine enroulée (6) et un canal de dissipation de chaleur (7, 10) s'étendant dans la direction axiale, avec un fluide de dissipation de chaleur, étant associé à au moins une dent de support (4), le canal de dissipation de chaleur (7) étant réalisé sous forme d'évidement axial dans la dent de support (4) et le canal de dissipation de chaleur (7) s'étendant dans la transition entre la base de dent de support (4b) et une bague de support (3) au niveau de laquelle est disposée la bague de support (4), **caractérisé en ce que** la distance radiale (r₂) du canal de dissipation de chaleur (7) par rapport à la surface d'enveloppe de la bague de support (8) est au moins aussi grande que la distance radiale (r₁) d'un espace de réception de bobine (5) situé entre des dents de support adjacentes (4) par rapport à la surface d'enveloppe de la bague de support (8).

2. Moteur électrique selon l'une de la revendication 1, **caractérisé en ce que** le canal de dissipation de chaleur (7) divise la dent de support (4) en deux bras, l'épaisseur (b) des deux bras, vue dans la direction périphérique, correspondant de manière combinée à au moins l'épaisseur (a) de la dent de support (4) au niveau de son endroit le plus étroit.

3. Moteur électrique, en particulier moteur de réglage ou d'entraînement dans des véhicules automobiles, en particulier selon la revendication 1 ou 2, comprenant un stator (1) et un rotor (2), au moins l'un de ces composants présentant une pluralité de dents de support (4) disposées sur la périphérie et chaque dent de support (4) étant pourvue d'une bobine enroulée (6) et un canal de dissipation de chaleur (7, 10) s'étendant dans la direction axiale, avec un fluide de dissipation de chaleur, étant associé à au moins une dent de support (4), le canal de dissipation de chaleur (7) étant réalisé sous forme d'évidement axial dans la dent de support (4), le canal de dissipation de chaleur (7) divisant la dent de support (4) en deux bras, l'épaisseur (b) des deux bras, vue dans la direction périphérique, correspondant de manière combinée à au moins l'épaisseur (a) de la dent de support (4) au niveau de son endroit le plus étroit, **caractérisé en ce que** deux canaux de dissipation de chaleur (10) espacés, s'étendant parallèlement sur la surface d'enveloppe de la bague de support (8), qui est appliqué sur la surface d'enveloppe de la bague de support (8), sont associés à chaque dent de support (4).

4. Moteur électrique selon l'une quelconque des revendications 1 à 3, **caractérisé en ce que** le canal de dissipation de chaleur (7) présente une section transversale approximativement triangulaire.

5. Moteur électrique selon l'une quelconque des revendications 1 à 4, **caractérisé en ce que** la dent de support (4) est pourvue d'une enveloppe en plastique (9).

6. Moteur électrique selon la revendication 5, **caractérisé en ce que** l'enveloppe en plastique (9) se compose du même matériau que le milieu de dissipation de chaleur dans le canal de dissipation de chaleur (7, 10).

7. Moteur électrique selon la revendication 5 ou 6, **caractérisé en ce que** l'espace de réception de bobine (5) situé entre des dents de support adjacentes (4) est revêtu de plastique.

8. Moteur électrique selon l'une quelconque des revendications 1 à 7, **caractérisé en ce qu'**un élément de séparation en plastique (12) pour réaliser une séparation en deux espaces individuels est disposé à l'intérieur de l'espace de réception de bobine (5).

9. Moteur électrique selon l'une quelconque des revendications 5 à 7 et 8, **caractérisé en ce que** l'élément de séparation en plastique (12) est réalisé d'une seule pièce avec l'enveloppe en plastique (9).

10. Moteur électrique selon l'une quelconque des revendications 1 à 8, **caractérisé en ce que** l'on utilise en tant que milieu de dissipation de chaleur du polyamide (PA), en particulier du PA 6.6.

11. Moteur électrique selon l'une quelconque des revendications 1 à 10, **caractérisé en ce qu'**un mandrin (14) en matériau de dissipation de chaleur est surmoulé axialement sur au moins une dent de support (4).

12. Moteur électrique selon l'une quelconque des revendications 1 à 11, **caractérisé en ce que** le stator (1) du moteur électrique est pourvu de dents de support (4) auxquelles est associé un canal de dissipation de chaleur (7, 10).

13. Procédé de fabrication d'un moteur électrique selon l'une quelconque des revendications 1 à 12, en ce que dans une première étape, une pluralité de segments de bague ayant chacun une dent de support (4) sont à chaque fois au moins en partie revêtus de plastique, en ce que dans une deuxième étape, un fil de bobine est enroulé sur les dents de support (4) et en ce que dans une troisième étape, les segments de bague pourvus des bobines (6) sont réunis pour former une bague.

14. Procédé selon la revendication 13, **caractérisé en ce que** dans la première étape, à chaque fois deux dents de support (4) de segments de bague adjacents sont revêtues en commun de plastique et **en ce que** lors de la mise en commun, une portion de revêtement de plastique en tant qu'élément de séparation en plastique (12) entre des segments de bague adjacents est rabattue dans l'espace de réception de bobine (5).
